Europäisches Patentamt

European Patent Office

Office européen des brevets

(19)

(11) Publication number: **0 041 667**
**A2**

## (12) EUROPEAN PATENT APPLICATION

(21) Application number: **81104148.2**

(22) Date of filing: **30.05.81**

(51) Int. Cl.³: **G 05 D 7/06**
**F 24 F 11/04**

(30) Priority: **05.06.80 IT 2257780**

(43) Date of publication of application:
**16.12.81 Bulletin 81/50**

(84) Designated Contracting States:
**AT BE CH DE FR GB LI LU NL SE**

(71) Applicant: **STERIL S.p.A.**
**Via G. Prina, 15**
**I-20154 Milan(IT)**

(72) Inventor: **Falini, Raffaele**
**Via Savonarola, 19**
**I-20100 Milan(IT)**

(74) Representative: **Racheli, Adele**
**ING. A. RACHELI & C. Viale San Michele del Carso 4**
**I-20144 Milano(IT)**

(54) A method and apparatus for maintaining constant the speed of an air flow within a room.

(57) This invention relates to the field of environments or rooms in which it is necessary to maintain a "controlled" air flow, that is an air flow under predetermined conditions of speed, contamination, etc. The invention is concerned with a method and apparatus for continuously detecting an indicative parameter of the air flow, such a detection being effected outside of the room (10) to be maintained under determined conditions, and for continuously automatically controlling the air flow on the ground of said detected parameter.

FIG.1

EP 0 041 667 A2

Applicant:

STERIL S.p.A.

Via G. Prina, 15

20154  MILAN (Italy)


"A METHOD AND APPARATUS FOR MAINTAINING CONSTANT THE SPEED
OF AN AIR FLOW WITHIN A ROOM".


The use of conditioned environments or rooms, particularly rooms under controlled contamination (that is with a content of particles of predetermined granulometry not exceeding certain limits) and at a speed such as to assure the non-turbulence of the flow, is wide spread, both in electronic and space industry, and in different biological applications (food industry pharmaceutical industry, hospitals, etc.); particularly, it is required in such rooms that air delivered by pneumatic blowing machines is admitted into the room at a speed such as to assure the non-turbulence of the flow. The air particle content is assured by adopting suitable filters, capable of retaining high percentages of impurities in the air (absolute filters). The flow laminarity (non-turbulence) is achieved by causing a flow of air, which should assure a contamination level within a determined space, through suitable emitting partitions (usually the same absolute filter) with a speed which is constant in time and uniform in space as set by positive specifications (for example, according to Federal Standard 209 b U.S.A. 0.45 m/sec).

Since the non-turbulence of the flow is an essential condition for the correct use of such a technology, it is quite necessary that the air speed is maintained constant in the involved zone. However, such a condition is in contrast with the fact that the absolute filter is subjected to continuous gradual clogging, which adds to loss of pressure, and as a result decreases the flow rate and accordingly the outlet speed. In order to overcome such a disadvantage, the pneumatic machine should be acted on to restore the flow rate. Therefore, a system should be provided for varying the performances of such a machine in accordance with the speed of the air flow in the involved zone. At present this is done inside the conditioned room: an operator senses the flow speed by a suitable air-speed meter and acts upon the pneumatic machine on the ground of the sensed data.

The following disadvantages would occur:

(a) the speed to be measured is at the low limit of sensitivity of commercial meters; this requires the use of expensive apparatuses (for example, thermo-anemometers);

(b) measuring in the laminar flow would alter the flow laminarity:

(c) measuring cannot be continuously effected (for each laminar flow apparatus, a meter of the same order of cost as the apparatus should be immobilized); and

(d)   the effected measure takes into account only one point of the surface emitting the laminar flow, while it should check a plurality of points of the emitting surface in order to take into account any differences between one point and another.

In order to avoid the high costs of air-speed meters or anemometers, an indirect system was resorted to, that is the laminar flow apparatus is provided with a differential gauge or manometer; however, a measure of difference in pressure is thus obtained. When the indication of this meter shows a filter clogging, the pneumatic machine has to be operated on. However, this system has the following disadvantages:

(a) it is not generally known which is the pressure variation at which tolerance limits are exceeded in the flow speed;

(b) in order to restore the flow, a user should have an air speed measuring meter, or should have characteristic curves of the pneumatic machine, then carrying out not simple and not always possible operations of trying to get a pressure which would assure the restoration of the standard speed.

Finally, it is practically impossible by the prior art systems, without using a highly sensitive air-speed meter, to adopt other speeds than standard speed, for example a low speed which would be sufficient when the apparatus is not in use to assure that no particles are deposited within the involved zone, or on the outer surface of the filter; with such a low speed, clogging would be considerably reduced.

0041667

- 4 -

It is the object of the present invention to overcome all of the above mentioned disadvantages.

Essentially, the invention consits of a method for maintaining an adjusjed flow air supply within an environment by one or more blowing or pneumatic machines, the process providing jo sense a measure or parameter off the air flow in a zone where, due to a narrower section area, the air speed is much higher than that of the laminar flow, for example where the suction air of the pneumatic machine passes, or on the canalization that carries the air from the pneumatic machine to a filter, through which said air is introduced into the environment. Thus, any of the commercial low cost meters (such as Pitot tube, meters, small fan meters, etc.) or any other system responsive to the preselected speed can be used. The novel process and apparatus are characterized by the following advantages:

(a) the measure outside of the flow does not alter the flow laminarity;

(b) the measure can be readily continuously effected;

(c) the measure on a reduced section area enables to obtain the total flow rate measure (uniform speed distribution in the laminar flow zone, therefore, in such a case, will be initially controlled by the manufacturer and will be no longer varied).

According to another aspect of the present invention, the apparatus comprises an automatic control unit, in which the measure signal relating to the air flow, as supplied by a sensor, is comnected to the pneumatic machine, and shiftings of said reading from a preset standard are used to modify the performances

0041667

- 5 -

of the pneumatic machine until the standard conditions are
restored. Thereby, a set point or reference value can be
preset at any desired value within the extreme limits of
flow rate and pressure as available from the pneumatic machine.

In the following an exemplary embodiment of the invention will
be described with reference to the accompanying drawings, in
which:

Fig. 1 is a schematic view showing an apparatus for maintaining
a controlled contamination air flow within a room;

Fig. 2 is a block diagram for the automatic adjustment of
the air flow; and

Fig. 3 is a perspective view with parts broken away showing a
fan-like sensor-pulse generator.

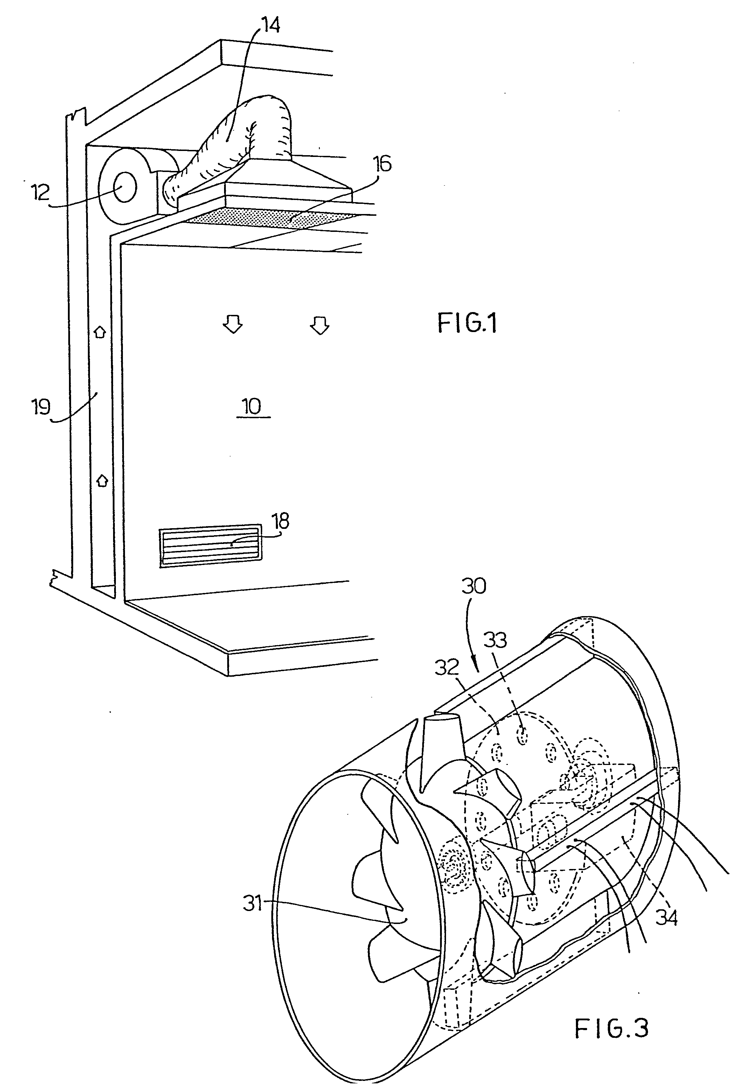

Referring first to Fig. 1, reference numeral 10 denotes as a
whole an environment or room to be maintained under "controlled
contamination". The air supply system, herein shown by mere
way of unrestrictive indication, comprises one or more blowers
or pneumatic machines 12, supplying air through conduits,
such 14, and a filter arrangement 16 to environment 10. Through
openings 18, air outflowing from the environment passes to an
air return conduit or channel 19 supplying the blower 12. The
arrows show the air circulation direction. As above mentioned,
it is necessary that the air flow within the environment is
maintained laminar and under determined temperature and flow rate
conditions.

According to the present invention, for flow control within the environment 10, it is provided to sense a parameter relating to the flow (such as the speed or flow rate), either within the conduit 14, or within the channel 19.

Preferably, such a parameter will be sensed throughout the air passage section area in such conduits or channels. The device for sensing such a parameter relative to the flow may be any of the suitable commercially available devices (such as, Pitot tube devices, etc.). However, a particularly suitable device has been designed and will now be described with reference to Fig. 3.

The device 30 of Fig. 3 substantially comprises a freely rotatable fan 31, having such dimensions as to completely occupy the air passage section area. A speed or revolution indicator is integral with said fan, which indicator is for example in the form of a disc 32 provided with circumferentially equally spaced apart holes 33. At one side of the disc, an electrical or optical emitter device 34 generates signals, which are sensed by a suitable receiver device (not shown) at the other side of the disc.

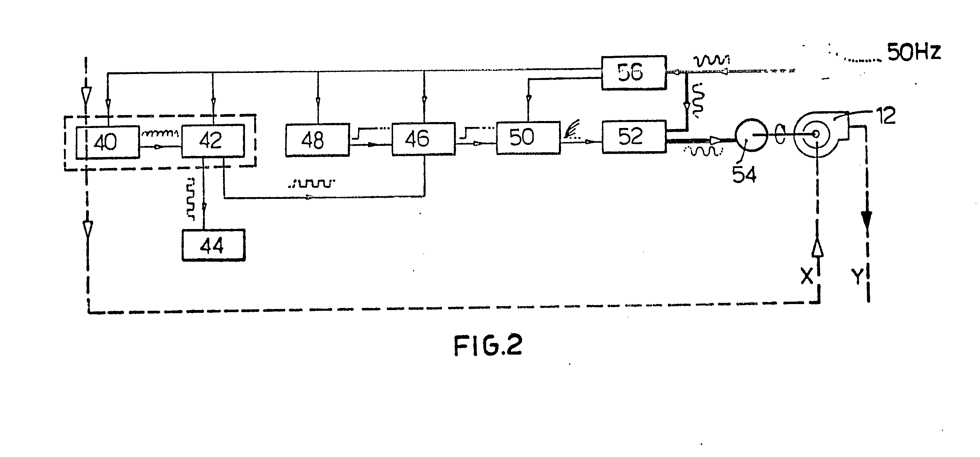

Fig. 2 is a block diagram for operation of the pneumatic machine, in an exemplary embodiment wherein sensing of the measure is effected on the return air, indicated at X, whereas Y indicates the delivery air. By obvious changes within the reach of those skilled in the art, such a diagram can be varied for application on the delivery air Y. As shown in Fig. 2, a speed sensor designated at 40 (which may be the small fan 30 or the like) supplies a signal to a pulse train generator 42. A portion of the pulse train is sent to a display 44 which provides an analog or digital indication of the air speed at the predetermined point. The other portion of the pulse train is sent to comparator 46 comparing the reference supply level set by threshold unit 48 with the potential of the pulse generator. The result of the comparison is supplied to modulator 50 which, depending on the received current level, modulates the supply voltage to the blower rotor, sent through a power circuit 52 to the pneumatic machine motor 54. A power supply /6 supplies the speed sensor, pulse generator, threshold unit, comparator and modulator, respectively.

The reference or threshold level can be preset at any value that can be read directly on the display and particularly: at a maintainment speed when the laminar flow apparatus is not used; at an operating speed; and at any other speed.

The described system provides for self-adjusting of flow rate or speed at the preset value.

STERIL S.p.A.

20154 - MILAN (Italy)

C L A I M S

1.      A method for maintaining an air supply with adjusted flow within an environment or room (10), comprising the steps of introducing air into the room by at least one pneumatic machine (12), sensing a parameter indicative of the air flow in the room, comparing said indicative parameter with a reference parameter, and controlling the operation of the pneumatic machine according to said sensed indicative parameter, characterized in that said sensing step of said indicative parameter is effected in an area outside of said room, in which area the air passes with a higher speed than in said room.

2.      A process according to Claim 1, characterized in that said indicative parameter is speed.

3.      A process according to Claim 1, characterized in that said indicative parameter is flow rate.

4.      A process according to Claim 1, characterized in that said sensing step is effected throughout the flow passing through said area.

5.     A process according to Claim 1, characterized in that said process is completely automated.

6.     An apparatus for maintaining an air supply with adjusted flow within a room, comprising pneumatic blowing machine means (12) for causing air flow introduction into the room, means for sensing an indicative parameter of the air flow, characterized in that said sensing means are located at an area outside of said room, in which area the air passes with a higher speed than in said room.

7.     An apparatus according to Claim 6, comprising inlet means (16), through which the air enters the room (10) and delivery conduit (14) between said pneumatic machine and said means, characterized in that said sensing means are located in said delivery conduit.

8.     An apparatus according to Claim 6, comprising outlet means (18) through which the air outflows from the room, and air air return conduit (19) between said outlet means and said pneumatic machine, characterized in that said sensing means are located in said return conduit.

9.     An apparatus according to Claim 6, characterized by comprising a pulse generator (42) connected to said sensing means (40); a comparator device (46) for comparison between a pulse generator output parameter and a preset reference parameter; the output from the comparator being used for controlling the pneumatic machine.

10.       An apparatus according to Claim 9, characterized in that said connected sensing means and pulse generator comprise a fan (31), a perforated disc (32) rotably integral with the fan, an emitter device (34) at one side of the perforated disc and a receiver device at the other side of the perforated disc.

11.       A apparatus according to Claim 6, characterized in that said sensing means comprises a Pitot tube device.

12.       An apparatus according to Claim 6, characterized in that said sensing means senses the said parameter of the whole air flow through said area.

FIG.1

FIG.3

FIG.2

50Hz